# EUROPÄISCHE PATENTSCHRIFT

(11) **EP 0 881 174 B1**
(45) Veröffentlichungstag und Bekanntmachung des Hinweises auf die Patenterteilung: **09.08.2000**
(21) Anmeldenummer: 98108640.8
(22) Anmeldetag: 12.05.1998
(51) Int. Cl.: B65G 47/61

(54) **Transporthänger für eine Hängefördereinrichtung**
Conveyor hook for a conveyor hanger assembly
Crochet de transport pour dispositif suspendu de convoyage

(30) Priorität: 21.05.1997 DE 29708967 U
(43) Veröffentlichungstag der Anmeldung: 02.12.1998
(73) Patentinhaber: Gärtner, Franz, 97656 Oberelsbach (DE)
(72) Erfinder: Gärtner, Franz, 97656 Oberelsbach (DE)
(74) Vertreter: Patentanwälte Dr. Solf & Zapf

(56) Entgegenhaltungen:
- DE-A- 3 834 576
- DE-C- 4 447 091
- FR-A- 2 719 570
- GB-A- 1 482 519
- US-A- 3 422 950
- US-A- 5 404 989

## Beschreibung

Die Erfindung betrifft einen Transporthänger für eine Hängefördereinrichtung, vorzugsweise für eine Sortierhängefördereinrichtung.

Ein derartiger Transporthänger für eine Hängefördereinrichtung ist aus der DE 38 34 576 C2 bekannt. Der Transporthänger, der in dieser Patentschrift als Transportgreifer bezeichnet wird, besteht aus einem in der Seitenansicht rechteckförmigen Grundkörper, der mit seinen Längsseiten vertikal angeordnet und im Bereich einer oberen Schmalseite an einer Schiene eines Kreisförderers mittels Laufrollen eingehängt ist. Mehrere Transporthänger sind an einem Zugmittel, das eine Kette oder ein elastisches Band sein kann, befestigt, wobei die Transporthänger in regelmäßigen Abständen am Zugmittel angeordnet sind. Das Zugmittel wird in Förderrichtung angetrieben, wobei es die in der Schiene abrollenden Transporthänger mitnimmt und diese umlaufend im Kreisförderer befördert.

Am unteren Endbereich weist der Transporthänger eine untere Schmalseite auf, in welche eine nach unten offene Ausnehmung eingebracht ist. An dem Transporthänger ist ein Schwenkelement schwenkbar befestigt. Das Schwenkelement weist einen in Förderrichtung zeigenden Hakenfinger auf, der an der unteren Schmalseite des rechteckförmigen Grundkörpers anliegt und die Ausnehmung verschließt. Am Schwenkelement ist an einem entgegen zur Förderrichtung vorstehenden Bereich des Grundkörpers eine Steuerrolle angeordnet.

Entlang der Schiene des Kreisförderers sind Ausschleusestationen vorgesehen, die einen Steuernocken aufweisen, an dem eine schräge Steuerfläche ausgebildet ist. Der Steuernocken kann mittels einer Stelleinrichtung in die Laufbahn der Steuerrollen geschwenkt werden. Beim Überfahren der Steuerfläche des Steuernockens durch das Steuerrad wird der Hakenfinger nach unten weggeschwenkt, so daß ein in der durch den Fingerhaken gebildeten Ausnehmung des Transporthängers eingehängter Haken nach unten fällt.

Im Bereich der Ausschleusestationen sind jeweils unterhalb der Schiene des Kreisförderers Abzweigschienen angeordnet, auf welche die freigegebenen Haken mit dem daran hängenden Gut fallen. Die Abzweigschienen weisen einen kurzen, parallel zur Schiene des Kreisförderers angordneten Aufnahmefinger auf, der an seinem in Förderrichtung vorderen Ende abgebogen und gelenkig mit der übrigen Abzweigschiene verbunden ist. Der Finger kann mit einer Fingerstelleinrichtung in die Laufbahn der das Gut tragenden Haken geschwenkt werden, um einen nach unten fallenden Haken aufzunehmen.

Mit diesem bekannten Hängeförderer werden die Haken an den einzelnen Ausschleusstationen nach vorbestimmten Sortierkriterien ausgeschleust, so daß sich nach einem vorbestimmten Kriterium sortiertes Gut auf der jeweils einer bestimmten Ausschleusestation zugeordneten Abzweigschiene ansammelt. Diese Art der Hängeförderer hat sich zum Sortieren von auf Haken hängendem Gut bewährt.

Jedoch kann durch die Trägheit der Haken und/oder des daran hängenden Gutes das Lösen der Haken von den Transporthängern unterschiedlich lange dauern - leichtes, großflächiges Gut löst sich sehr langsam von dem weggeschwenkten, schräg nach unten vorstehenden Hakenfinger; schweres, insbesondere kleinflächiges Gut fällt abrupt nach unten auf den Aufnahmefinger der Abzweigschiene -, so daß bei hohen Fördergeschwindigkeiten eine definierte Übergabe des auf Haken hängenden Gutes auf die Abzweigschiene nicht möglich ist und es durch zu spätes Lösen der das Gut tragenden Haken vom Transporthänger zu Fehlabwürfen kommen kann.

Zudem fallen die das Gut tragenden Haken im freien Fall unkontrolliert. Ein Haken, der einer Schwingung um eine vertikale Hochachse unterliegt, kann mit seinem freien Ende auf einem Aufnahmefinger auftreffen, so daß er sich nicht am Aufnahmefinger einhängt, sondern seitlich herabfällt. Dieser unkontrollierte Zustand ist ein wesentlicher Nachteil dieser bekannten Sortierfördervorrichtung.

Aus der GB-PS 1 482 519 geht ein ähnlicher Transportfinger mit einem nach unten wegschwenkenden Hakenfinger hervor. Der Hakenfinger ist schwenkbar am Transporthänger gelagert und wird mittels eines separat ausgebildeten Steuerhebels betätigt. Am Steuerhebel ist seitlich vorstehend eine Steuerrolle angeordnet, welche an einer schräg gestellten Steuerschiene ausgelenkt werden kann. Auch bei diesem Transporthänger wird das auf Haken hängende Gut durch Herabfallen auf eine Abzweigschiene ausgeschleust.

Der Erfindung liegt die Aufgabe zugrunde, eine Transporteinrichtung mit einem Transporthänger für eine Hängefördereinrichtung, vorzugsweise für eine Sortierhängefördereinrichtung zu schaffen, mit der an Haken hängendes Gut sicher und schnell transportiert und definiert ausgeschleust werden kann. Dabei sollen die Einrichtungen unkompliziert aufgebaut sein und aus wenigen Einzelteilen, insbesondere aus wenigen zu bewegenden Einzelteilen für das Ausschleusen bestehen, sowie bisher ungenutzten Raum neben der Transportstrecke ausnutzen.

Die Aufgabe wird durch einen Transporthänger mit den Merkmalen des Anspruchs 1 gelöst. Vorteilhafte Ausgestaltungen sind in den Unteransprüchen gekennzeichnet.

Die Erfindung wird nachfolgend beispielhaft anhand der Zeichnung näher erläutert. Es zeigen:
- Fig. 1: einen Transporthaken des erfindungsgemäßen Transporthängers in perspektivischer Ansicht ohne seinen oberen Endbereich;
- Fig. 2: einen Transporthänger in Seitenansicht;
- Fig. 3: den Transporthänger aus Fig. 2 im Querschnitt mit Blickrichtung nach unten und ohne Hakensteg;
- Fig. 4: einen Auswurfhebel in der Frontansicht;
- Fig. 5: den Transporthänger aus Fig. 2 in der Seitenansicht im Bereich einer Ausschleusestation;
- Fig. 6: den Transporthänger in der Seitenansicht mit ausgeschwenktem Auswurfhebel;
- Fig. 7: den in Fig. 6 abgebildeten Transporthänger mit ausgeschwenktem Auswurfhebel in der Draufsicht.

Der erfindungsgemäße Transporthänger 1 weist einen Transporthaken 2 auf. Der Transporthaken 2 besteht aus einem quaderförmig, vertikal langgestreckten Grundkörper 3 und einem in Förderrichtung 4 am unteren Ende des Grundkörpers 3 vorstehenden Hakensteg 6. Der Grundkörper 3 weist eine in Förderrichtung 4 vordere und hintere, schmale Stirnfläche 7, 8 und zwei Breitseitenflächen 9 auf. Der Hakensteg 6 ist in Form eines Kreisbogensegments vom unteren Ende des Grundkörpers 3 in Förderrichtung 4 nach vorne oben gerichtet und erstreckt sich in seiner Gesamtlänge nicht ganz bis zu einem Viertelbogen.

Der Hakensteg 6 weist zwei Seitenflächen 10, eine obere, kreisbogenförmig verlaufende Auflagefläche 11 und eine vorzugsweise ebenfalls kreisbogenförmig verlaufende Unterfläche 12 auf. An dem dem unteren Ende des Grundkörpers 3 gegenüberliegend angeordneten freien Ende 13 ist der Hakensteg 6 mit einer in der Seitenansicht kreisbogenförmigen bzw. gerundeten Stirnfläche 14 ausgebildet, die oberhalb bzw. unterhalb des Hakenstegs 6 in die Auflagefläche 11 bzw. die Unterfläche 12 übergeht.

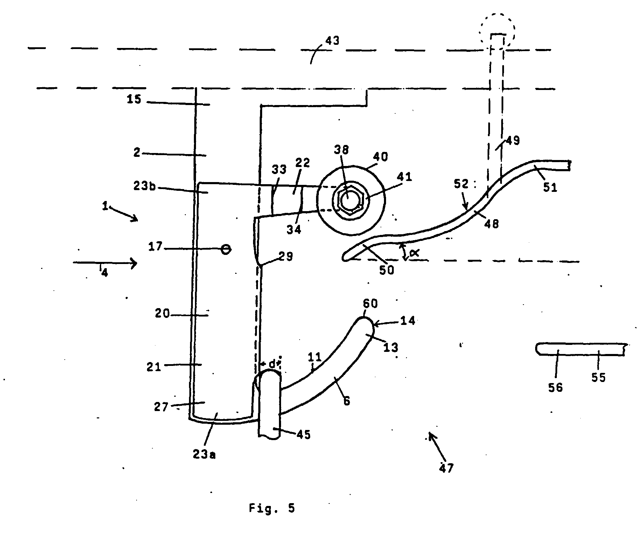

Der Transporthaken 2 weist einen oberen Endbereich 15 (Fig. 5) auf, der in an sich bekannter Weise als Koppelelement ausgebildet ist, mit welchem der Transporthaken 2 an ein Zugmittel eines Kreisförderers eingehängt bzw. gekoppelt werden kann.

In den Grundkörper 3 ist auf einem Niveau oberhalb des freien Endes des Hakenstegs 6 eine Bohrung 16 bzw. Loch eingebracht, die bzw. das den Grundkörper 3 horizontal zwischen und senkrecht zu den beiden Seitenflächen 9 erstreckend durchsetzt. Die Bohrung 16 ist im Kreismittelpunkt der durch die Auflagefläche 11 bzw. die Unterfläche 12 beschriebenen Kreisbögen angeordnet.

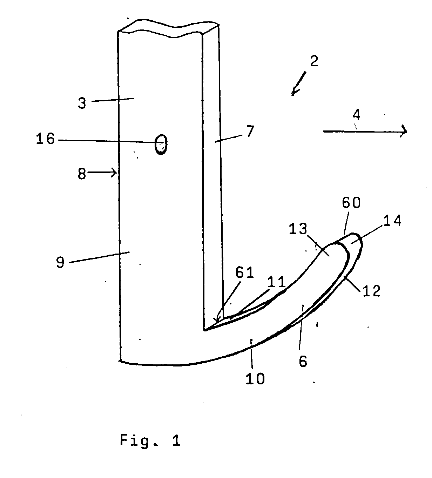

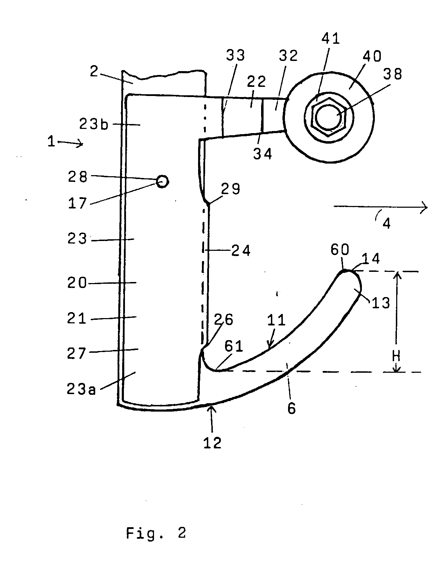

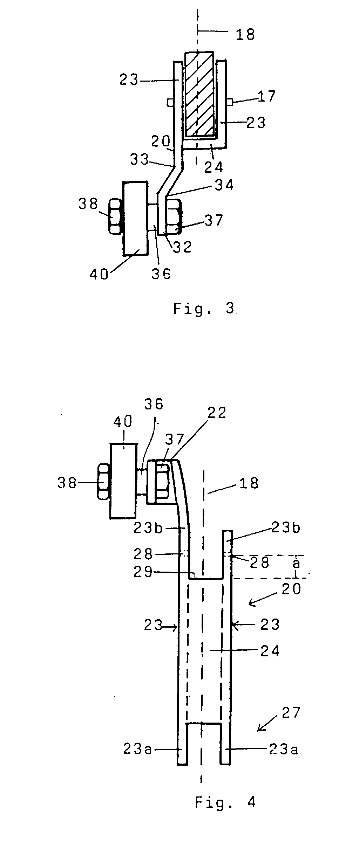

In der Bohrung 16 lagert ein Achsbolzen 17, der beidseitig am Grundkörper 3 über dessen Seitenflächen 9 vorsteht (Fig. 2, 3). Der Achsbolzen 17 steht senkrecht auf einer Längsmittenebene 18 des Transporthakens 2 des erfindungsgemäßen Transporthängers 1.

Auf dem Achsbolzen 17 ist schwenkbar ein Auswurfhebel 20 gelagert. Der Auswurfhebel 20 besteht aus einem Hebelarm 21 und einem davon abgewinkelten Steuerarm 22. Der Hebelarm 21 umgreift den Transporthaken 27 und ist ein im Querschnitt im wesentlichen U-förmiges Blechteil mit zwei Seitenwandungen 23, die den Seitenflächen 9 eng benachbart gegenüberliegend angeordnet sind, und einer in Förderrichtung 4 vorne an den Seitenwandungen 23 gegen die vordere Stirnfläche 7 anschlagend angeordneten Anschlagsstirnwandung 24. Die Seitenwandungen 23 erstrecken sich mit Seitenwandungsendbereichen 23a nach unten annähernd bis zur Unterfläche 12 des Hakensteges 6. Die Stirnwandung 24 endet kurz oberhalb der Auflagefläche 11 des Hakenstegs 6 und weist eine untere horizontale Kante 26 auf. Die über die Kante 26 nach unten vorstehenden Seitenwandungsendbereiche 23a bilden somit einen gabelförmigen unteren Endbereich 27 (Fig. 4), der den unteren Endbereich des Transporthakens 2 bzw. den Hakensteg 6 umgreift.

In den oberen Endbereichen 23b der Seitenwandungen 23 ist jeweils ein Loch 28 eingebracht, die zueinander gegenüberliegend, fluchtend angeordnet sind und von dem Achsbolzen 17 durchgriffen werden. Die Stirnwandung 24 weist eine obere Begrenzungskante 29 auf, die mit Abstand a unterhalb der Löcher 28 angeordnet ist (Fig. 4).

Eine der beiden Seitenwandungen 23 weist einen ein Stück über die Löcher 28 verlängerten oberen Endbereich 23b auf. Der verlängerte obere Endbereich 23b ist von der Längsmittenebene 18 des Transporthängers 1 etwas weggerichtet nach außen abgebogen. An diesen verlängerten oberen Endbereich 23b ist etwa im rechten Winkel in Förderrichtung 4 vorstehend der Steuerarm 22 angebunden.

Der Steuerarm 22 weist einen in Förderrichtung 4 vorne angeordneten freien Endbereich 32 auf (Fig. 3), der mit zwei Biegungen 33, 34 von der Mittenebene 18 weggerichtet abgekröpft ist, wobei die Aufspannebene des freien Endbereichs 32 des Steuerarms 22 etwa parallel zur Mittenebene 18 angeordnet ist.

An den freien Endbereich 32 ist auf einen Achsbolzen aufgesteckt eine Lagerbuchse 36 mittels einer Schraubverbindung 37, 38 befestigt. Die Lagerbuchse 36 ist senkrecht zur Mittenebene 18 und der der Mittenebene 18 gegenüberliegenden Seite des Steuerarms 22 angeordnet. Auf der Lagerbuchse 36 ist eine Steuerrolle 40 mittels eines Kugellagers 41 drehbar gelagert. Die Rollenanordnung bildet ein Übergewicht bezüglich der Hebelanordnung 21, 22, so daß der Hebelarm 21 mit seiner Wandung 24 an die Stirnfläche 7 des Transporthakens 2 anliegend gehalten wird.

Die erfindungsgemäßen Transporthänger 1 werden in einem an sich bekannten Kreisförderer eingesetzt, in dem sie mit dem oberen Endbereich 15 des Transporthakens 2 starr nach unten gerichtet in eine Schiene 43 eingesetzt und von einem endlosen Zugmittel, beispielsweise einer Kette oder einem Riemen, in Förderrichtung 4 kontinuierlich angetrieben werden (Fig. 5).

Das Beladen des Transporthängers 1 mit einem Haken 45, auf bzw. an dem ein Gut hängt, z. B. mit dem Kleiderbügelhaken eines Kleiderbügels, auf dem ein zu sortierendes Bekleidungsstück hängt, erfolgt in an sich bekannter Weise, indem z. B. ein Haken 45 auf ein kurzes Schienenelement (nicht dargestellt) mit zwei parallelen Gleisen gehängt wird, die so angeordnet sind, daß zwischen den Gleisen der erfindungsgemäße Transporthänger 1 mit seinem Transporthaken 2 hindurchfährt und den Haken 45 mit dem zu transportierenden Gut mitnimmt.

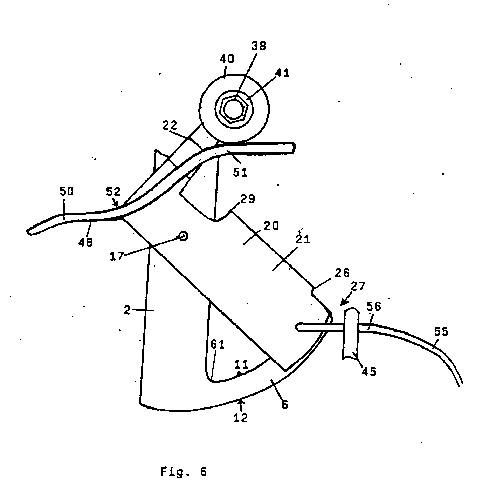

Zum Ausschleusen des an den Transporthängern 1 eingehängten Haken 45 sind mehrere Ausschleusstationen 47 entlang der Schiene 43 angeordnet. Eine Ausschleusstation 47 weist jeweils eine Steuerschiene 48 auf, die mittels einer Stelleinrichtung 49 in die Laufbahn der Steuerrolle 40 geschwenkt werden kann. Die Steuerschiene 48 weist in der Seitenansicht (Fig. 5, 6) einen im wesentlichen S-förmigen, bzw. leicht wellenförmigen Kurvenverlauf mit zwei langen, flachen Wellenbergen 50, 51 und einem dazwischen angeordneten Wellental 52 auf. Die Steuerschiene 48 ist mit einer in Förderrichtung 4 ansteigenden Neigung gegenüber einer Horizontalen 53 angeordnet. Der Neigungswinkel α liegt im Bereich von 10° bis 40° und vorzugsweise im Bereich von 15° bis 25°. Die Funktion der Steuerschiene 48 wird weiter unten näher erläutert.

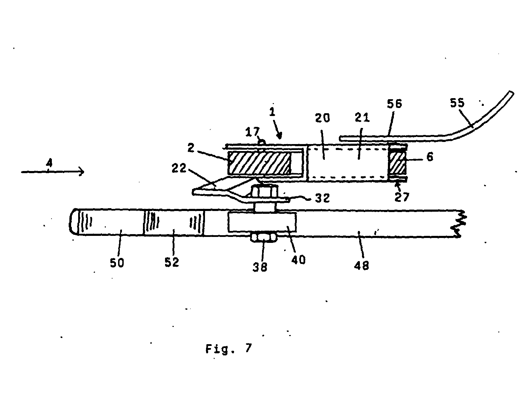

An der Ausschleusstation 47 ist jeweils eine fest installierte Abzweigschiene 55 angeordnet. Die Abzweigschiene 55 weist als Aufnahmefinger 56 einen z. B. geradlinigen Endbereich zur Aufnahme eines Hakens 45 auf. Der Aufnahmefinger 56 ist z. B. parallel zur Mittenebene 18 oder seitlich nach außen wegführend, horizontal oder nach unten geneigt zweckmäßigerweise etwa auf Höhe des freien Endes 13 des Hakensteges 6 angeordnet. In jedem Fall ist der Aufnahmefinger 56 höher als der tiefste Punkt der Auflagefläche 11 des Hakenstegs 6 und zweckmäßigerweise tiefer als das freie Ende 60 des Hakenstegs 6 positioniert, so daß der Finger 56 nicht in den Bewegungsweg des Transporthängers 1 samt Haken 45 ragt. Der Aufnahmefinger 56 zeigt mit seinem freien Ende entgegen zur Förderrichtung 4 und ist so angeordnet, daß beim Vorbeifahren eines Transporthängers 1 sich nur ein schmaler Spalt 57 zwischen dem Aufnahmefinger 56 und dem Transporthänger 1 bildet (Fig. 7).

Die Abzweigschiene 55 ist im Anschluß an den Aufnahmefinger 56 von der zur Mittenebene 18 parallelen Ebene, in der sich das vordere Ende des Fingers 56 befindet, nach außen weggerichtet und abschüssig geneigt ausgebildet.

Zum Ausschleusen eines Hakens 35 wird die Steuerschiene 48 mittels der Stelleinrichtung 49 in die Laufbahn der Steuerrolle 40 geschwenkt. Ein mit einem Haken 45 beladener Transporthänger 1 wird entlang der Schiene 43 in Förderrichtung 4 auf die Ausschleusestation 47 zubewegt. Die Steuerrolle 40 trifft im Bereich des unteren Wellenberges 50 auf die Steuerschiene 48 auf. Die Steuerrolle 40 rollt auf der Steuerschiene 48 durch das Wellental 52 und den oberen Wellenberg 51 ab. Beim Abrollen der Steuerrolle 40 aus dem Wellental 52 auf den Wellenberg 51 wird die Steuerrolle 40 angehoben, wodurch der Auswurfhebel 20 um den Achsbolzen 17 entgegen der Förderrichtung 4 geschwenkt wird. Der Steuerarm 22 wird hierbei nach oben und der Hebelarm 21 mit seinem unteren Endbereich 27 in Förderrichtung 4 nach vorne und oben bewegt (Fig. 5, 6). Der gegabelte untere Endbereich 27 des Hebelarms 21 schiebt einen am Transporthaken 2 eingehängten Kleiderbügelhaken 45 auf dem Hakensteg 6 in Förderrichtung 4 zum freien Ende 13 des Hakenstegs 6 nach oben. Der Haken 45 gleitet an dem Hakensteg 6 nach oben und wird entsprechend der Steigung des steilen Übergangsbereichs der Steuerschiene 48 zwischen dem Wellental 52 und dem oberen Wellenberg 51 bewegt. Diese Bewegung kann sogar in eine freie wurfartige Bewegung übergehen. Gleichzeitig passiert der Transporthänger 1 den Aufnahmefinger 56. Da der Haken 45 hochgehoben wurde, kann der Aufnahmefinger 56 seitlich in den hakenförmig gebogenen Bereich des Hakens 45 eingreifen. Beim weiteren Auflaufen des Hakens 45 auf den Finger 56 gleitet der Haken 45 auf dem Aufnahmefinger 56 weiter bis zur abschüssigen Abzweigschiene 55 und auf dieser abwärts zur Ausschleusstation. Der Finger 56 und die Abzweigschiene 55 sind derart verlaufend angeordnet, daß der Haken 45 mit dem Gut seitlich von der Transporteinrichtung weggezogen wird. An der Übernahmestelle zwischen dem freien Ende 13 des Hakenstegs 6 und dem freien Ende des Fingers 56 wird der Haken 55 zweckmäßigerweise vom Hakensteg 6 ein Stück geschoben; dementsprechend sind diese Teile einander zugeordnet positioniert.

Soll die Ausschleusstation 47 ohne Ausschleusen eines Hakens 45 von einem erfindungsgemäßen Transporthänger 1 passiert werden, so wird lediglich die Steuerschiene 48 aus der Laufbahn der Steuerrolle 40 ausgeschwenkt. Der Auswurfhebel 20 wird beim Passieren der Ausschleusstation 47 nicht betätigt und der Haken 45 verbleibt im tiefsten Bereich des Hakensteges 6, so daß er unterhalb des auf der Höhe des freien Endes 13 des Hakensteges 6 angeordneten Aufnahmefingers 56 an der Abzweigschiene 55 vorbeigefahren wird. Bei der erfindungsgemäßen Sortierhängefördereinrichtung ist es somit nicht notwendig, den Aufnahmefinger 56 mit einer Verstelleinrichtung zwischen einer Position, in der Haken 45 aufgenommen werden und einer Position, in der keine Haken 45 aufgenommen werden, zu verschwenken. Sobald die Rolle 40 eine aktivierte Steuerschiene 48 überfahren hat, fällt sie aufgrund ihres Gewichts nach unten und verschwenkt die Hebelarme 21, 22 wieder in ihre Ausgangsstellung.

Durch eine aufgrund der Steigung der Steuerschiene 48 beschleunigte Abwerfbewegung wird der Haken 45 auf die Abzweigschiene 55 geschoben und gleitet auf der Abzweigschiene 55 entlang. Dabei kann er von dem folgenden nunmehr leeren Transporthaken weitergehoben werden, bis er seitlich und nach unten wegrutscht und somit vom Transporthänger 1 entfernt wird. Die Haken 45 werden kontrolliert aus dem Transporthaken 2 durch den Hebelarm 21 durch Ausschieben aktiv herausgehoben, so daß jegliches Verhaken zwischen einem Transporthänger 1 und einem Haken 45 beim Ausschleusvorgang ausgeschlossen ist. Die erfindungsgemäßen Transporthänger stellen somit ein sicheres Ausschleusen von an Haken hängendem Gut sicher. Das Ausschleusen kann bei hoher Transportgeschwindigkeit erfolgen, da die auszuschleusenden Haken 45 nicht frei fallen, sondern vom Hakensteg 6 des Transporthängers 1 unmittelbar auf die Abzweigschiene 55 mechanisch geführt übergeben werden.

Bei der erfindungsgemäßen Sortierhängefördereinrichtung können die Abzweigschienen 55 in Förderrichtung sowohl rechts als auch links vom Sortierhänger 1 angeordnet sein. Vorzugsweise werden die Abzweigschienen so angeordnet, daß sie in dem geschlossenen Hakenbogen des Hakens 45, d. h., in den Teilbereich des Hakens 45 eingreifen, der in den mit dem Bügel verbundenen Hakenstiel übergeht.

Das oben dargestellte Ausführungsbeispiel des Sortierhängers weist einen einzigen Steuerarm 22 auf. Gleichermaßen ist es möglich, an beiden Seiten des Auswurfhebels 22 jeweils einen Steuerarm mit einer Steuerrolle 40 vorzusehen, so daß von beiden Seiten der Transportschiene 43 eine Steuerschiene 48 in die Laufbahn einer der beiden Steuerrollen 40 eingeschwenkt werden kann.

Zur Erzielung des beschleunigten Abwurfes der Haken 45 ist es nicht notwendig, daß der Hakensteg 6 in Förderrichtung 4 kreisbogenförmig nach oben verläuft. Der Hakensteg 6 kann auch mit einer anderen, z. B. geringeren oder steileren Krümmung oder mit geradliniger, nach oben weisender Auflagebahn 11 ausgebildet sein. Die kreisbogenförmige Krümmung des Hakenstegs 6 des Ausführungsbeispieles stellt jedoch eine bevorzugte Ausführungsform dar, bei der der obere Kulminationspunkt 60 der vorderen Stirnfläche 14 des Hakensteges 6 etwa drei- bis viermal höher als die Dicke d eines Drahtes, aus dem üblicherweise die Haken 45 gebogen sind, über dem tiefsten Punkt 61 der Auflagefläche 11 angeordnet ist, so daß mit ausreichend Spiel ein am Transporthaken 2 eingehängter Haken 45 einen Aufnahmefinger 56 unterfahren kann und beim Ausschleusen des Hakens 45 der Haken 45 über den oberen Kulminationspunkt 60 der vorderen Stirnfläche 14 auf den Aufnahmefinger 56 angehoben wird. Der Höhenunterschied H zwischen dem Kulminationspunkt 60 und dem tiefsten Punkt 61 der Auflagefläche 11 liegt im Bereich von 1,0cm bis 3cm und vorzugsweise im Bereich von 1,5cm bis 2,5cm.

Außerdem findet zwischen dem Haken 45 und dem Hebelarm 21 keine Relativbewegung, die Reibung erzeugen könnte, statt.

Die Querschnittsform des Transporthakens 2 kann z. B. auch rund oder oval sein. Die Raumform des Auswurfhebels kann ebenfalls anders ausgebildet sein. Wesentlich ist seine Funktion, den Bügelhaken 45 in Förderrichtung nach oben auszuheben.

## Patentansprüche

1. Transporthänger für eine Hängefördereinrichtung, insbesondere einen Kreisförderer, zum Befördern von auf Haken (45) hängendem Gut, wobei der Transporthänger einen Transporthaken (2) mit einem in Förderrichtung (4) zeigenden Hakensteg (6) zur Aufnahme eines Hakens (45) aufweist, dadurch gekennzeichnet, daß ein Auswurfhebel (20) vorgesehen ist, der in Förderrichtung (4) schwenkbar am Transporthänger (1) derart angeordnet ist, daß er beim Verschwenken den Haken (45) vom Hakensteg (6) in Förderrichtung (4) abstreift.

2. Transporthänger nach Anspruch 1,
**dadurch gekennzeichnet,**
daß der Hakensteg (6) in Förderrichtung (4) ansteigend ausgebildet ist.

3. Transporthänger nach Anspruch 1 und/oder 2,
**dadurch gekennzeichnet,**
daß der Hakensteg (6) in Förderrichtung bogenförmig ansteigend ausgebildet ist.

4. Transporthänger nach Anspruch 3,
**dadurch gekennzeichnet,**
daß der Hakensteg (6) kreisbogenförmig ansteigend ausgebildet ist.

5. Transporthänger nach Anspruch 1 und/oder 2,
**dadurch gekennzeichnet,**
daß der Hakensteg (6) gewinkelt geradlinig ansteigend ausgebildet ist.

6. Transporthänger nach einem oder mehreren der Ansprüche 1 bis 5,
**dadurch gekennzeichnet,**
daß der Transporthaken (2) aus einem vertikal langgestreckten Grundkörper (3) und dem am unteren Ende des Grundkörpers (3) angeordneten Hakensteg (6) besteht.

7. Transporthänger nach einem oder mehreren der vorhergehenden Ansprüche,
**dadurch gekennzeichnet,**
daß der Grundkörper (3) quaderförmig ausgebildet ist.

8. Transporthänger nach einem oder mehreren der Ansprüche 1 bis 6,
**dadurch gekennzeichnet,**
daß der Grundkörper (3) im Querschnitt rund ausgebildet ist.

9. Transporthänger nach einem oder mehreren der Ansprüche 1 bis 6,
**dadurch gekennzeichnet,**
daß der Grundkörper (3) im Querschnitt oval ausgebildet ist.

10. Transporthänger nach Anspruch 7,
**dadurch gekennzeichnet,**
daß der Grundkörper (3) eine in Förderrichtung (4) vordere und hintere, schmale Stirnfläche (7, 8) und zwei Breitseitenflächen (9) aufweist und der Hakensteg (6) zwei Seitenflächen (10), eine obere Auflagefläche (11) und eine Unterfläche (12) sowie eine Stirnfläche (14) aufweist, die in der Seitenansicht bogenförmig, kreisbogenförmig oder gerade gewinkelt zur Längserstreckung des Grundkörpers (3) ausgebildet ist und oberhalb bzw. unterhalb des Hakenstegs (6) in die Auflagefläche (11) bzw. die Unterfläche (12) übergeht.

11. Transporthänger nach Anspruch 7,
**dadurch gekennzeichnet,**
daß ein Höhenunterschied (H) zwischen einem tiefsten Punkt (61) der Auflagefläche (11) und einem oberen Kulminationspunkt (60) der Stirnfläche (14) im Bereich von 1 cm bis 3 cm und vorzugsweise im Bereich von 1,5 bis 2,5 cm liegt.

12. Transporthänger nach einem oder mehreren der Ansprüche 1 bis 11,
**dadurch gekennzeichnet,**
daß der Auswurfhebel (20) aus einem Hebelarm (21) und einem Steuerarm (22) ausgebildet ist, wobei der Steuerarm (22) gewinkelt zum Hebelarm (21) angeordnet ist, wobei der Steuerarm (22) in Förderrichtung (4) nach vorne weisend am Auswurfhebel (20) ausgebildet ist.

13. Transporthänger nach Anspruch 12,
**dadurch gekennzeichnet,**
daß der Steuerarm (22) im rechten Winkel zum Hebelarm (21) angeordnet ist.

14. Transporthänger nach einem oder mehreren der vorhergehenden Ansprüche,
**dadurch gekennzeichnet,**
daß der Hebelarm (21) ein Blechteil mit einer in Förderrichtung (4) vorne an der Seitenwandung (23) angeordneten Anschlagwandung (24) ist.

15. Transporthänger nach einem oder mehreren der Ansprüche 7 bis 14,
**dadurch gekennzeichnet,**
daß der Hebelarm (21) ein im Querschnitt U-förmiges Blechteil mit zwei Seitenwandungen (23) und der in Förderrichtung (4) vorne an der Seitenwandung (23) angeordneten Stirnwandung (24) ist.

16. Transporthänger nach einem oder mehreren der vorhergehenden Ansprüche,
**dadurch gekennzeichnet,**
daß sich die Seitenwandungen (23) mit Seitenwandungsendbereichen (23) nach unten annähernd bis zur Unterfläche (12) des Hakenstegs (6) erstrecken und die Stirnwandung (24) kurz oberhalb der Auflagefläche (11) des Hakenstegs (6) endet und eine untere horizontale Kante (26) aufweist, so daß der Hebelarm (21) den Hakensteg (6) übergreifend gabelförmig ausläuft.

17. Transporthänger nach einem oder mehreren der vorhergehenden Ansprüche,
**dadurch gekennzeichnet,**
daß der Auswurfhebel (20) an einem den Transporthaken (2) horizontal durchgreifenden Achsbolzen (17) schwenkbar gelagert ist.

18. Transporthänger nach Anspruch 17,
**dadurch gekennzeichnet,**
daß der Achsbolzen (17) im Mittelpunkt des den Kreisbogen des Hakensteges (6) bestimmenden Kreises am Transporthaken (2) angeordnet ist.

19. Transporthänger nach einem oder mehreren der vorhergehenden Ansprüche,
**dadurch gekennzeichnet,**
daß der Steuerarm (22) oberhalb des Achsbolzens (17) am Hebelarm (21) angebunden ist und einen in Förderrichtung (4) vorne angeordneten freien Endbereich (32) aufweist, der mit zwei Biegungen (33, 34) von einer Mittenebene (18) des Transporthängers (1) weggerichtet abgekröpft ist, wobei die Aufspannebene des freien Endbereichs (32) des Steuerarms (22) etwa parallel zur Mittenebene (18) angeordnet ist.

20. Transporthänger nach Anspruch 19,
**dadurch gekennzeichnet,**
daß an dem freien Endbereich (32) des Steuerarms (22) auf der der Mittenebene (18) gegenüberliegenden Seite eine Lagerbuchse (36) angeordnet ist, die senkrecht zur Mittenebene (18) ausgerichtet ist, wobei auf der Lagerbuchse (36) eine Steuerrolle (40) drehbar gelagert ist.

21. Transporthänger nach Anspruch 19 und/oder 20,
**dadurch gekennzeichnet,**
daß die Steuerrolle (40) mittels eines Kugellagers (41) auf der Lagerbuchse (36) gelagert ist.

22. Sortierhängefördereinrichtung zum Sortieren von auf Haken hängendem Gut, insbesondere Kreisförderer, mit einer Schiene (43) an der entlang Transporthänger (1) umlaufend geführt sind, wobei an der Schiene (43) zumindest eine oder mehrere Ausschleusstationen (47) angeordnet sind,
**dadurch gekennzeichnet,**
daß die Transporthänger nach einem oder mehreren der Ansprüche 1 bis 21 ausgebildet sind.

23. Sortierhängefördereinrichtung nach Anspruch 22,
**dadurch gekennzeichnet,**
daß die Ausschleusstation (47) eine Steuerschiene (48) aufweist, die mittels einer Stelleinrichtung (49) in die Laufbahn der Steuerrollen (40) geschwenkt werden kann.

24. Sortierhängefördereinrichtung nach Anspruch 21 und/oder 22,
**dadurch gekennzeichnet,**
daß die Steuerschiene (48) in der Seitenansicht einen wellenförmig bzw. S-förmig geformten Kurvenverlauf mit zwei langen, flachen Wellenbergen (50, 51) und einem dazwischen angeordneten Wellental (52) aufweist.

25. Sortierhängefördereinrichtung nach einem oder mehreren der Ansprüche 21 bis 24,
**dadurch gekennzeichnet,**
daß die Steuerschiene (48) mit einer in Förderrichtung (4) ansteigenden Neigung gegenüber einer Horizontalen (53) angeordnet ist, wobei der Neigungswinkel vorzugsweise im Bereich von 10° bis 40° und insbesondere im Bereich von 15° bis zu 25° liegt.

26. Sortierhängefördereinrichtung nach einem oder mehreren der Ansprüche 21 bis 25,
**dadurch gekennzeichnet,**
daß an der Ausschleusstation (47) jeweils eine Abzweigschiene (55) angeordnet ist, die mit einem Aufnahmefinger (56) etwa auf Höhe des freien Endes (13) des Hakenstegs (6) des Transporthängers (1) angeordnet ist.

27. Sortierhängefördereinrichtung nach Anspruch 26,
**dadurch gekennzeichnet,**
daß der Aufnahmefinger (56) so angeordnet ist, daß beim Vorbeifahren eines Transporthängers (1) sich nur ein schmaler Spalt (57) zwischen dem Aufnahmefinger (56) und dem Transporthänger (1) ausbildet.

28. Sortierhängefördereinrichtung nach Anspruch 27,
**dadurch gekennzeichnet,**
daß der Aufnahmefinger (56) geradlinig ausgebildet ist und parallel zur Mittenebene (18) horizontal ausgerichtet ist.

29. Sortierhängefördereinrichtung nach einem oder mehreren der Ansprüche 26 bis 28,
**dadurch gekennzeichnet,**
daß die Abzweigschiene (55) an dem vom Aufnahmefinger (56) wegführenden Bereich von der Mittenebene (18) weggerichtet abgebogen und abschüssig geneigt ausgebildet ist.

## Claims

1. Transporting hanger for a hanging conveyor, especially a cyclic conveyor for the transport of articles suspended on hooks (45), such that the transporting hanger comprises a carrier hook (2) with a hook web (6) facing towards the movement direction (4), which receives a hook (45),
**characterised in that**
an off-loading lever (20) is provided, which is arranged on the transporting hanger (1) and can swivel in the movement direction (4) such that, when it swivels, it pushes the hook (45) along the hook web (6) in the movement direction (4).

2. Transporting hanger according to Claim 1,
**characterised in that**
the hook web (6) is shaped such that it rises in the movement direction (4).

3. Transporting hanger according to Claims 1 and/or 2,
**characterised in that**
the hook web (6) is shaped such that it curves upwards in the movement direction.

4. Transporting hanger according to Claim 3,
**characterised in that**
the hook web (6) curves up in a circular arc.

5. Transporting hanger according to Claims 1 and/or 2,
**characterised in that**
he hook web (6) rises as a straight section set at an angle.

6. Transporting hanger according to one or more of Claims 1 to 5,
**characterised in that**
the carrier hook (2) consists of an extended vertical main body (3) at the bottom of which is arranged the hook web (6).

7. Transporting hanger according to any of the preceding claims,
**characterised in that**
the main body (3) is of parallelepiped shape.

8. Transporting hanger according to one or more of Claims 1 to 6,
**characterised in that**
the cross-section of the main body (3) is round.

9. Transporting hanger according to one or more of Claims 1 to 6,
**characterised in that**
the cross-section of the main body (3) is oval.

10. Transporting hanger according to Claim 7,
**characterised in that**
the main body (3) has narrow end surfaces (7, 8) facing forwards and backwards along the movement direction (4) and two broad side surfaces (9), and the hook web (6) comprises two side surfaces (10), an upper supporting surface (11) and an underside (12) as well as an end surface (14), the web (6) when seen from the side being a curve, a circular arc, or a straight section set at an angle to the length of the main body (3), with its end surface (14) merging with the supporting surface (11) of the hook web (6) at the top thereof and with its underside (12) underneath it.

11. Transporting hanger according to Claim 7,
**characterised in that**
there is a difference in height (**H**) between the lowest point (61) of the supporting surface (11) and the upper apex (60) of the end surface (14), which is in the range 1 to 3 cm and preferably in the range 1.5 to 2.5 cm.

12. Transporting hanger according to one or more of Claims 1 to 11,
**characterised in that**
the off-loading lever (20) is formed of a lever arm (21) and a control arm (22), with the control arm (22) positioned at an angle to the lever arm (21), such that the control arm (22) is formed on the off-loading lever (20) facing forwards in the movement direction (4).

13. Transporting hanger according to Claim 12,
**characterised in that**
the control arm (22) is perpendicular to the lever arm (21).

14. Transporting hanger according to one or more of the preceding claims,
**characterised in that**
the lever arm (21) is a sheet component with a contact wall (24) positioned at the front of its side wall (23) in the movement direction (4).

15. Transporting hanger according to one or more of Claims 7 to 14,
**characterised in that**
the lever arm (21) is a sheet component with a U-shaped cross-section having two side walls (23) with the front wall (24) positioned on the side wall (23) facing forwards in the movement direction (4).

16. Transporting hanger according to one or more of the preceding claims,
**characterised in that**
the side walls (23) have side wall end portions (23a) extending downwards almost as far as the underside (12) of the hook web (6), and the front wall (24) ends slightly above the supporting surface (11) of the hook web (6) and has a lower horizontal edge (26), such that the lever arm (21) overlaps the hook web (6) outside and around it like a fork.

17. Transporting hanger according to one or more of the preceding claims,
**characterised in that**
the off-loading lever (20) is hinged on the carrier hook (2) and can swivel about a horizontal, through-going axle bolt (17).

18. Transporting hanger according to Claim 17,
**characterised in that**
the axle bolt (17) is positioned on the carrier hook (2) at the centre of the circle that defines the circular arc of the hook web (6).

19. Transporting hanger according to one or more of the preceding claims,
**characterised in that**
the control arm (22) is connected to the lever arm (21) above the axle bolt (17) and has a free end section (32) facing forwards in the movement direction (4), which has two bends (33, 34) whereby it is offset from a mid-plane (18) of the transporting hanger (1), such that the mounting plane of the free end section (32) of the control arm (22) is essentially parallel to the mid-plane (18).

20. Transporting hanger according to Claim 19,
**characterised in that**
on the free end section (32) of the control arm (22) on the side opposite the mid-plane (18), is positioned a bearing bush (36) that extends perpendicularly to the mid-plane (18), and a control roller (40) is mounted and can rotate on the bearing bush (36).

21. Transporting hanger according to Claims 19 and/or 20,
**characterised in that**
the control roller (40) is mounted on the bearing bush (36) by means of a ball bearing (41).

22. Sorting hanging conveyor assembly for the sorting of articles suspended on hooks, especially a cyclic conveyor, with a rail (43) along which transporting hangers (1) are moved around the cycle, with at least one or several off-loading stations (47) located along the rail (43),
**characterised in that**
the transporting hangers are constructed according to one or more of Claims 1 to 21.

23. Sorting hanging conveyor assembly according to Claim 22,
**characterised in that**
the off-loading station (47) comprises a control rail (48), which can be swivelled by a positioning device (49) into the path of the control rollers (40).

24. Sorting hanging conveyor assembly according to Claims 21 and/or 22,
**characterised in that**
seen from the side, the control rail (48) has a curved, wave or S shape with two long, flat wave peaks (50, 51) with a wave trough (52) between them.

25. Sorting hanging conveyor device according to one or more of Claims 21 to 24,
**characterised in that**
the control rail (48) is positioned with an inclination rising in the movement direction (4) relative to a horizontal (53), such that the angle of inclination is preferably in the range 10° to 40° and especially in the range 15° to 25°.

26. Sorting hanging conveyor device according to one or more of Claims 21 to 25,
**characterised in that**
at the off-loading station (47) in each case a branch rail (55) is arranged, which is positioned with a receiving finger (56) approximately at the level of the free end (13) of the hook web (6) of the transporting hanger (1).

27. Sorting hanging conveyor assembly according to Claim 26,
**characterised in that**
the receiving finger (56) is positioned such that when a transporting hanger (1) passes by, there is only a narrow gap (57) between the receiving finger (56) and the transporting hanger (1).

28. Sorting hanging conveyor assembly according to Claim 27,
**characterised in that**
the receiving finger (56) is straight, and is directed horizontally, parallel to the mid-plane (18).

29. Sorting hanging conveyor assembly according to one or more of Claims 26 to 28,
**characterised in that**
the branch rail (55), in its portion leading away from the receiving finger (56), is bent away from the mid-plane (18) and is inclined at the end.

## Revendications

1. Dispositif de suspension pour le transport destiné à un mécanisme de transport en suspension, en particulier à un transporteur circulaire, pour transporter des marchandises suspendues à des crochets (45), dans lequel le dispositif de suspension pour le transport présente un crochet de transport (2) comprenant une barre de crochet (6) orientée dans la direction de transport (4), pour la réception d'un crochet (45), caractérisé en ce qu'on prévoit un levier d'éjection (20) qui est disposé en pivotement sur le dispositif de suspension (1) pour le transport dans la direction de transport (4) de telle sorte que, lors du pivotement du crochet (45), il se retire de la barre de crochet (6) dans la direction de transport (4).

2. Dispositif de suspension pour le transport selon la revendication 1, caractérisé en ce que la barre de crochet (6) est réalisée en position ascendante dans la direction de transport (4).

3. Dispositif de suspension pour le transport selon les revendications 1 et/ou 2, caractérisé en ce que la barre de crochet (6) est réalisée en position ascendante en formant une courbe dans la direction de transport.

4. Dispositif de suspension pour le transport selon la revendication 3, caractérisé en ce que la barre de crochet (6) est réalisée en direction ascendante en formant un arc de cercle.

5. Dispositif de suspension pour le transport selon les revendications 1 et/ou 2, caractérisé en ce que la barre de crochet (6) est réalisée en position ascendante de manière rectiligne en formant un angle.

6. Dispositif de suspension pour le transport selon une ou plusieurs des revendications 1 à 5, caractérisé en ce que le crochet de transport (2) est constitué par un corps de base (3) étiré en longueur en direction verticale et par la barre de crochet (6) disposée à l'extrémité inférieure du corps de base (3).

7. Dispositif de suspension pour le transport selon une ou plusieurs des revendications précédentes, caractérisé en ce que le corps de base (3) est réalisé en forme rectangulaire.

8. Dispositif de suspension pour le transport selon une ou plusieurs des revendications 1 à 6, caractérisé en ce que le corps de base (3) est réalisé avec une section transversale ronde.

9. Dispositif de suspension pour le transport selon une ou plusieurs des revendications 1 à 6, caractérisé en ce que le corps de base (3) est réalisé avec une section transversale ovale.

10. Dispositif de suspension pour le transport selon la revendication 7, caractérisé en ce que le corps de base (3) présente des surfaces frontales étroites avant et arrière (7, 8) dans la direction de transport (4) et deux surfaces latérales larges (9), et la barre de crochet (6) présente deux surfaces latérales (10), une surface d'appui supérieure (11) et une surface inférieure (12), ainsi qu'une surface frontale (14) qui est réalisée, dans une vue latérale, en formant une courbe, en formant un arc de cercle, ou de manière rectiligne en formant un angle par rapport à l'étendue longitudinale du corps de base (3) et se transforme au-dessus, respectivement en dessous de la barre de crochet (6), en surface d'appui (11), respectivement en surface inférieure (12).

11. Dispositif de suspension pour le transport selon la revendication 7, caractérisé en ce qu'une différence de hauteur (H) existe entre un endroit (61) de la surface d'appui (11) situé le plus bas et un point culminant supérieur (60) de la surface frontale (14) dans le domaine de 1 cm à 3 cm, de préférence dans le domaine de 1,5 à 2,5 cm.

12. Dispositif de suspension pour le transport selon une ou plusieurs des revendications 1 à 11, caractérisé en ce que le levier d'éjection (20) est réalisé à partir d'un bras de levier (21) et d'un bras de commande (22), le bras de commande (22) étant disposé en formant un angle par rapport au bras de levier (21), dans lequel le bras de commande (22) est réalisé sur le levier d'éjection (20) en étant orienté vers l'avant dans la direction de transport (4).

13. Dispositif de suspension pour le transport selon la revendication 12, caractérisé en ce que le bras de commande (22) est disposé en formant un angle droit par rapport au bras de levier (21).

14. Dispositif de suspension pour le transport selon une ou plusieurs des revendications précédentes, caractérisé en ce que le bras de levier (21) est un élément en tôle comprenant une paroi de butée (24) disposée à l'avant dans la direction de transport (4) contre la paroi latérale (23).

15. Dispositif de suspension pour le transport selon une ou plusieurs des revendications 7 à 14, caractérisé en ce que le bras de levier (21) est un élément en tôle de section transversale en U comprenant deux parois latérales (23) et la paroi frontale (24) est disposée en avant dans la direction de transport (4) contre la paroi latérale (23).

16. Dispositif de suspension pour le transport selon une ou plusieurs des revendications précédentes, caractérisé en ce que les parois latérales (23) étendent vers le bas leurs zones terminales (23) approximativement jusqu'à la surface inférieure (12) de la barre de crochet (6) et la paroi frontale (24) se termine à courte distance au-dessus de la surface d'appui (11) de la barre de crochet (6) et présente une arête horizontale (26), si bien que le bras de levier (21) suit le mouvement de la barre de crochet (6) en la chevauchant à la manière d'un étrier.

17. Dispositif de suspension pour le transport selon une ou plusieurs des revendications précédentes, caractérisé en ce que le levier d'éjection (20) est monté en pivotement sur un tourillon (17) traversant horizontalement le crochet de transport (2).

18. Dispositif de suspension pour le transport selon la revendication 17, caractérisé en ce que le tourillon (17) est disposé sur le crochet de transport (2) au centre du cercle déterminant l'arc de cercle de la barre de crochet (6).

19. Dispositif de suspension pour le transport selon une ou plusieurs des revendications précédentes, caractérisé en ce que le bras de commande (22) est raccordé au bras de levier (21) au-dessus du tourillon (17) et présente une zone terminale libre (32) disposée à l'avant dans la direction de transport (4), qui se termine avec deux flexions (33, 34) en s'écartant d'un plan médian (18) du dispositif de suspension (1) pour le transport, le plan d'extension de la zone terminale libre (32) du bras de commande (22) étant disposé approximativement parallèlement au plan médian (18).

20. Dispositif de suspension pour le transport selon la revendication 19, caractérisé en ce que, dans la zone terminale libre (32) du bras de commande (22), est disposé un palier (36) sur le côté opposé au plan médian (18), qui est orienté perpendiculairement au plan médian (18), un galet de commande (40) étant monté en rotation sur le palier (36).

21. Dispositif de suspension pour le transport selon les revendications 19 et/ou 20, caractérisé en ce que le galet de commande (40) est monté sur le palier (36) à l'aide d'un roulement à billes (41).

22. Mécanisme de transport en suspension destiné au triage, pour le triage de marchandises suspendues à des crochets, en particulier un transporteur circulaire comprenant une glissière (43) le long de laquelle sont guidés des dispositifs de suspension (1) pour le transport en effectuant un mouvement circulaire, dans lequel au moins un ou plusieurs postes d'éclusage au-dehors (47) sont disposés sur la glissière (43), caractérisé en ce que les dispositifs de suspension pour le transport sont réalisés conformément à une ou plusieurs des revendications 1 à 21.

23. Mécanisme de transport en suspension destiné au triage selon la revendication 22, caractérisé en ce que le poste d'éclusage au-dehors (47) présente une glissière de commande (48) qui peut pivoter, à l'aide d'un mécanisme de réglage (49), dans la voie de roulement des galets de commande (40).

24. Mécanisme de transport en suspension destiné au triage selon les revendications 21 et/ou 22, caractérisé en ce que la glissière de commande (48) présente, dans une vue latérale, l'allure d'une courbe de forme ondulée, respectivement en forme de S, comprenant deux longues crêtes de vagues plates (50, 51) et un creux de vague (52) disposé entre elles.

25. Mécanisme de transport en suspension destiné au triage selon une ou plusieurs des revendications 21 à 24, caractérisé en ce que la glissière de commande (48) est disposée avec une inclinaison ascendante par rapport à l'horizontale (53) dans la direction de transport (4), l'angle d'inclinaison se situant de préférence dans le domaine de 10° à 40°, en particulier dans le domaine de 15° à 25°.

26. Mécanisme de transport en suspension destiné au triage selon une ou plusieurs des revendications 21 à 25, caractérisé en ce qu'une glissière de bifurcation (55) est disposée respectivement au poste d'éclusage au-dehors (47), qui est disposée, avec un doigt de réception (56), approximativement à hauteur de l'extrémité libre (13) de la barre de crochet (6) du dispositif de suspension (1) pour le transport.

27. Mécanisme de transport en suspension destiné au triage selon la revendication 26, caractérisé en ce que le doigt de réception (56) est arrangé de telle sorte que, lorsqu'un dispositif de suspension (1) pour le transport passe devant lui, une fente seulement étroite (57) se forme entre le doigt de réception (56) et le dispositif de suspension (1) pour le transport.

28. Mécanisme de transport en suspension destiné au triage selon la revendication 27, caractérisé en ce que le doigt de réception (56) est réalisé de manière rectiligne et est orienté à l'horizontale parallèlement au plan médian (18).

29. Mécanisme de transport en suspension destiné au triage selon une ou plusieurs des revendications 26 à 28, caractérisé en ce que la glissière de bifurcation (55) est pliée dans la zone s'écartant du doigt de réception (56) en se détournant du plan médian (18) et est réalisée en formant une pente raide.
